# EUROPEAN PATENT SPECIFICATION

(11) **EP 2 501 183 B1**
(45) Date of publication and mention of the grant of the patent: **06.05.2015**
(21) Application number: 11158116.1
(22) Date of filing: 14.03.2011
(51) Int. Cl.: H04W 52/02, H04M 1/73

(54) **Electronic device and method for application and profile sensitive battery power management**
Elektronische Vorrichtung und Verfahren zur Anwendung und profilsensitive Batterieleistungsverwaltung
Dispositif électronique et procédé pour l'application et la gestion de l'alimentation de batterie sensible au profil

(43) Date of publication of application: 19.09.2012
(73) Proprietor: BlackBerry Limited, Waterloo, ON N2K 0A7 (CA)
(72) Inventor: Kalyanasundaram, Sanjay, Waterloo Ontario N2L 3W8 (CA); Gopalan, Balaji, Mississauga Ontario L4W 0B5 (CA)
(74) Representative: Moore, Barry

(56) References cited:
- EP-A1- 1 521 438
- EP-A1- 2 051 157
- EP-A2- 2 270 528
- US-A1- 2003 149 904
- US-A1- 2003 158 609

## Description

The present application relates generally to electronic devices having multiple applications and a method of application- and profile-sensitive power management in the electronic device.

Electronic devices, including portable electronic devices, have gained widespread use and can perform a variety of functions including, for example, telephonic, electronic messaging, gaming, multimedia and other personal information manager (PIM) application functions. Portable electronic devices can include several types of devices including mobile stations such as simple cellular telephones, smart telephones, wireless PDAs, and laptop computers with wireless 802.11 or 802.15 (for example, Bluetooth^{™} or ZigBee^{™}) capabilities. These devices run on a wide variety of networks from data-only networks such as Mobitex and DataTAC to complex voice and data networks such as GSM/GPRS, CDMA, EDGE, UMTS and CDMA2000 networks. Portable electronic devices are typically powered by a finite power supply, which has a limited power capacity. An example of such a power supply is a rechargeable battery.

### GENERAL

In general, the concepts described below may support management of available power in a portable electronic device. For purposes of illustration, the concepts will be described in the context of a finite power supply that comprises a rechargeable battery. The concepts are not limited to rechargeable batteries, however, or to any particular battery chemistry. As used herein, a "finite power supply" refers to a depletable power supply having a finite amount of stored electrical energy to power electronic devices connected to the power supply. Examples of other finite power supplies include fuel cells and non-rechargeable batteries. Typically, a finite power supply supports the portability of the portable electronic device. Some portable electronic devices may receive power from (or may have power supplies such as rechargeable batteries recharged by) a relatively fixed power source having a much less restricted supply of power (such as a wall outlet receiving power from an electrical grid). Portability may be more limited while the portable electronic device receives power from such a less restricted supply of power, however.

In general, applications installed on a portable electronic device-which are in general software designed to accomplish one or more functions or designed to support access to one or more services-have different power requirements. In addition, various applications have varying degrees of use and importance to users. For example, emergency voice communication applications may be of universally high value, while some users may prefer certain data communication applications, such as Instant Messaging (IM) or Social Networking Service (SNS) service applications, over other communication applications, such as voice or email communication applications. Improved power management techniques can make the more valued or higher priority applications-for example, application priority levels as defined by the user-available when power resources are running low.

Further, power management as described herein can enhance user experience by extending the availability of emergency or preferred applications over that of other applications. The power management method comprises determining a residual power level in a finite power level and selectively disabling one or more applications stored in whole or in significant part on the portable electronic device based on an application ranking profile of each of the one or more applications to manage the residual power in the portable electronic device when the residual power level falls below a threshold power level. As used herein, "residual power level" refers to the level of stored power available from the finite power supply at a given instance. For example, a residual power level of 80% indicates that 20% of the stored energy has been depleted, and the finite power supply is currently charged to 80% of its maximum capacity. The following also describes example devices that can carry out the power management methods.

EP2270528 A2 discloses a detection device (30) for detecting battery charge status (32) of a user terminal device (10), and a display (26) for displaying the application-specific battery charge status. A charging state arrangement (34) is provided for determining and displaying the application-specific battery charge status by utilizing a predetermined deactivation priority of an application. A runtime determination arrangement is provided for determining and displaying a remaining runtime depending on the application-specific battery charge status and power consumption of the application. An independent claim is also included for a method for displaying a battery charge status of a user terminal device.

EP1521438 A1 discloses applications (71-7x; 8-24) in user profiles (25.1-25.x), which are activated or deactivated in a series of operating systems, which are given or freely-selectable by the mobile radio unit user. The voltage sources (33.1-33.2) for activation or deactivation of applications, are individually determined as a function of the energy situation of the mobile radio unit.

US2003/158609 A1 discloses a power management system for a portable device, which uses a variety of techniques for dynamically controlling the allocation of power among components of the portable device. A power-priority scheme progressively disables, or reduces the power to, individual components of the device, such that lesser important functions are disabled sooner, to provide a longer power duration to more important functions, such as data-retention functions. A performance-dependent scheme continuously adjusts the power to select components to maintain a minimum performance level, thereby avoiding power consumption for more-than-necessary performance. A user of the device is provided options for effecting the desired power-prioritization, and levels of performance.

EP2051157 A1 discloses a method and apparatus for enabling or disabling a feature in a mobile device based on a battery level threshold, the method including: checking a battery level (112); determining whether the battery level is above or below a predetermined threshold for the feature (117,120); and enabling (118) or disabling (122) the feature based on the result of the determining step (117,120). Further, a method and server application for enabling or disabling a feature based on a battery level threshold, the method including: obtaining a battery level at a server application; comparing the battery level with a preconfigured threshold for the feature; and modifying data or a data type to be sent to the mobile device based on the result of the comparing step.

US2003/149904 A1 discloses a power management method for portable electronic terminals. According to the invention, a priority rank is decided in accordance with the user's intention, or on the degree of importance of each functional module, or on the operation time thereof. Therefore, when power is deficient, the modules with lower priorities are not provided with power temporarily, but operation of the modules with higher priorities is guaranteed.

### SUMMARY

The present teaching provides a method as detailed in claim 1. Also provided is a method in accordance with claim 11, a device according to claim 12 and a computer program product in accordance with claim 13. Advantageous features are provided in dependent claims.

### BRIEF DESCRIPTION OF THE DRAWINGS

Embodiments of the present application will now be described, by way of example only, with reference to the attached Figures, wherein:
Figure 1 is a block diagram of an example of an embodiment of a portable electronic device;
Figure 2 is an example of a block diagram of a communication subsystem component of Figure 1;
Figure 3 is a block diagram of an example of an implementation of a node of a wireless network;
Figure 4 is a block diagram illustrating components of an example of a configuration of a host system that the portable electronic device can communicate with;
Figures 5 is a flowchart illustrating a method of power management in a portable electronic device powered by a finite power supply according to an example embodiment;
Figure 6 is a schematic representation of an application ranking profile API for power management in a portable electronic device according to an example embodiment;
Figure 7 is a schematic representation of an operating system level application ranking profile API for power management in a portable electronic device according to an example embodiment;
Figure 8 is a schematic representation of an application level application ranking profile API for power management in a portable electronic device according to an example embodiment; and
Figure 9 is a flowchart illustrating method for presenting a user interface for modifying a relative importance indicator of an application for power management in a portable electronic device according to an example embodiment.

### DETAILED DESCRIPTION

For simplicity and clarity of illustration, where considered appropriate, reference numerals may be repeated among the figures to indicate corresponding or analogous elements. In addition, numerous specific details are set forth in order to provide a thorough understanding of the example embodiments described herein. However, the example embodiments described herein may be practiced without these specific details. In other instances, well-known methods, procedures and components have not been described in detail so as not to obscure the example embodiments described herein. Also, the description is not to be considered as limiting the scope of the example embodiments described herein.

The example embodiments described herein generally relate to portable electronic devices. Examples of portable electronic devices include mobile or handheld (that is, sized to be held or carried in a human hand) wireless communication devices such as pagers, cellular phones, cellular smart-phones, wireless organizers, personal digital assistants, computers, laptops, handheld wireless communication devices, wirelessly enabled notebook computers and the like.

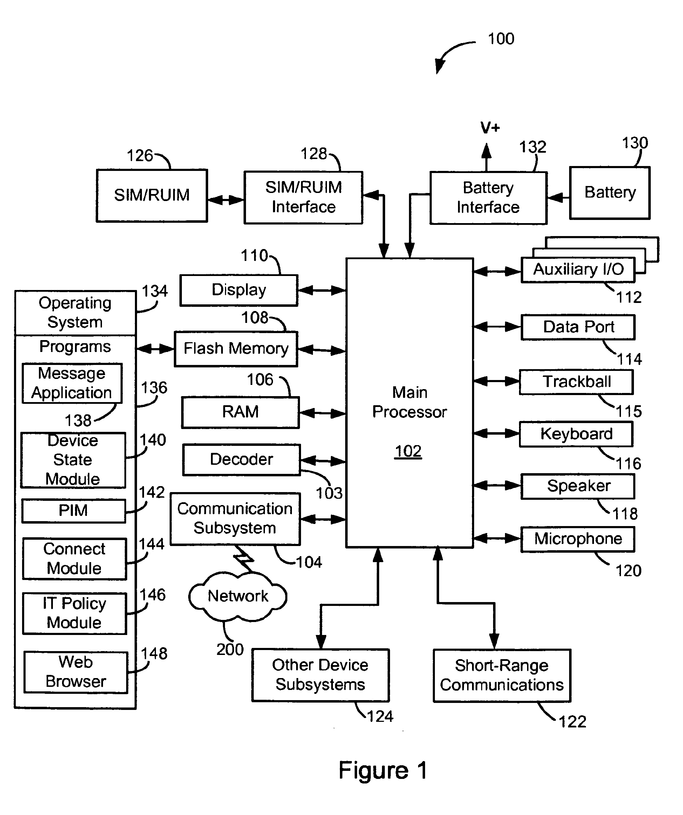

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). To aid the reader in understanding the structure of the portable electronic device and how it communicates with other devices and host systems, reference will now be made to Figures 1 through 4.

Referring first to Figure 1, shown therein is a block diagram of an example of an embodiment of a portable electronic device 100. The portable electronic device 100 includes a number of components such as a main processor 102 that controls the overall operation of the portable electronic device 100. For purposes of simplicity, it will be assumed that operations related to power management, which will be described in more detail below, can be carried out by the processor 102. Further, it will be assumed for purposes of simplicity that the processor 102 can control or execute software applications. Communication functions, including data and voice communications, are performed through a communication subsystem 104. Data received by the portable electronic device 100 can be decompressed and decrypted by a decoder 103, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 104 receives messages from and sends messages to a wireless network 200. In this example of an embodiment of the portable electronic device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, the example embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with portable electronic device 100 is a GSM/GPRS wireless network in one example of an implementation, other wireless networks may also be associated with the portable electronic device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and third-generation (3G) networks such as EDGE and UMTS. Some other examples of data-centric networks include WiFi 802.11, 802.15, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a trackball 115, a keyboard 116, a speaker 118, a microphone 120, short-range communications 122 and other device subsystems 124.

Some of the subsystems of the portable electronic device 100 perform communication-related functions, whereas other subsystems may provide "resident" or on-device functions. By way of example, the display 110, the trackball 115 (or, in some devices, optical trackpad) and the keyboard 116 may be used for both communication-related functions, such as entering a text message for transmission over the network 200, and device-resident functions such as a calculator or task list.

The portable electronic device 100 can send and receive communication signals over the wireless network 200 after network registration or activation procedures have been completed. Network access is associated with a subscriber or user of the portable electronic device 100. To identify a subscriber, a SIM/RUIM card 126 (i.e. Subscriber Identity Module or a Removable User Identity Module) is inserted into a SIM/RUIM interface 128 in order to communicate with a network. The SIM/RUIM card 126 is a type of a conventional "smart card" that can be used to identify a subscriber of the portable electronic device 100 and to personalize the portable electronic device 100, among other things. In the present example embodiment, the portable electronic device 100 is not fully operational for communication with the wireless network 200 without the SIM/RUIM card 126. By inserting the SIM/RUIM card 126 into the SIM/RUIM interface 128, a subscriber can access all subscribed services. Services may include: web browsing and messaging such as email, voice mail, Short Message Service (SMS), and Multimedia Messaging Services (MMS). More advanced services may include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical portable electronic device. The SIM/RUIM card 126 may store additional subscriber information for a portable electronic device as well, including datebook (or calendar) information and recent call information. Alternatively, user identification information can also be programmed into the flash memory 108.

In the illustrative embodiment shown in Figure 1, the portable electronic device 100 is a battery-powered device and includes a battery interface 132 for receiving one or more rechargeable batteries 130. In at least some example embodiments, the battery 130 can be a smart battery with an embedded microprocessor. The battery interface 132 is coupled to a regulator (not shown), which assists the battery 130 in providing power V+ to the portable electronic device 100. Although this embodiment makes use of a battery, other embodiments may employ different or supplemental finite power supplies, such as micro fuel cells.

The portable electronic device 100 also includes an operating system 134 and software components 136 to 148 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Portions of the operating system 134 and the software components 136 to 146, such as specific device applications, or parts thereof, may be temporarily loaded into a volatile store such as the RAM 106. Other software components can also be included. In some embodiments, the display 110 may show one or more icons representing the various applications installed on the portable electronic device 100.

The subset of software applications 136 that control basic device operations, including data and voice communication applications are typically first installed on the portable electronic device 100 during its manufacture. Other software applications include a message application 138 that can be any suitable software program that allows a user of the portable electronic device 100 to send and receive electronic messages. Various alternatives exist for the message application 138. Messages that have been sent or received by the user are typically stored in the flash memory 108 of the portable electronic device 100 or some other suitable storage element in the portable electronic device 100. In at least some example embodiments, some of the sent and received messages may be stored remotely from the device 100 such as in a data store of an associated host system that the portable electronic device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the portable electronic device 100 is turned off or loses power.

The PIM 142 includes functionality for organizing and managing data items of interest to the user, such as, but not limited to, email, contact data records, calendar events, voice mails, appointments, and task items. PIM applications include, for example, calendar, address book, tasks and memo applications. The PIM applications have the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 100 with respect to such items. This can be particularly advantageous when the host computer system is the portable electronic device subscriber's office computer system.

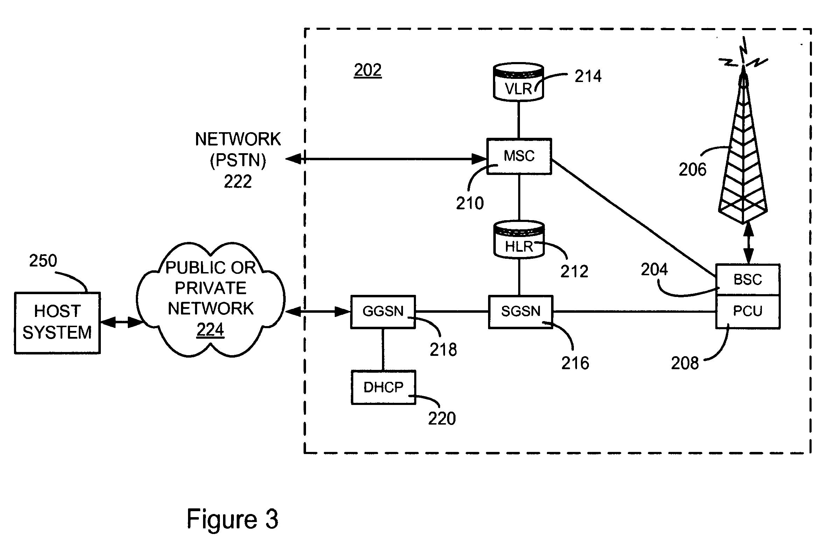

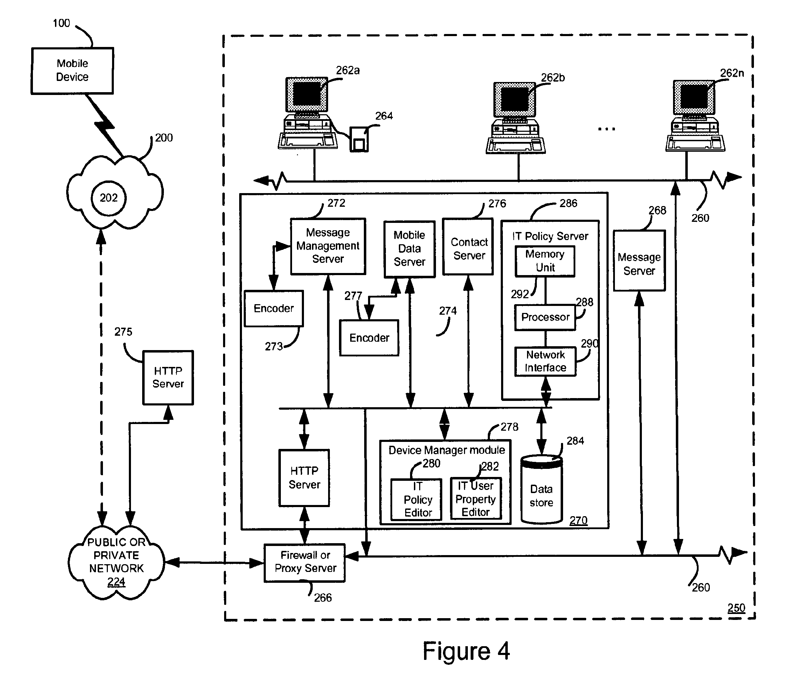

The portable electronic device 100 also includes a connect module 144, and an information technology (IT) policy module 146. The connect module 144 implements the communication protocols that are required for the portable electronic device 100 to communicate with the wireless infrastructure and any host system, such as an enterprise system, that the portable electronic device 100 is authorized to interface with. Examples of a wireless infrastructure and an enterprise system are given in Figures 3 and 4, which are described in more detail below.

The connect module 144 includes a set of application program interfaces (APIs) that can be integrated with the portable electronic device 100 to allow the portable electronic device 100 to use any number of services. The connect module 144 allows the portable electronic device 100 to establish an end-to-end secure, authenticated communication pipe with the host system. A subset of applications for which access is provided by the connect module 144 can be used to pass IT policy commands from the host system to the portable electronic device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be provided on the portable electronic device 100, including the Web browser 148 for enabling a user to display and interact with text, images, videos, music and other information from a webpage at a website on the World Wide Web or on a local network.

Still other types of software applications can be installed on the portable electronic device 100. Such software applications can be third-party applications, which may be added after the manufacture of the portable electronic device 100. Examples of third-party applications may include games, calculators, utilities, etc.

The additional applications can be loaded onto the portable electronic device 100 through at least one of the wireless network 200, the auxiliary I/O subsystem 112, the data port 114, the short-range communications subsystem 122, or any other suitable device subsystem 124. This flexibility in application installation increases the functionality of the portable electronic device 100 and may provide enhanced on-device functions, communication-related functions, or both. For example, secure communication applications may enable electronic commerce functions and other such financial transactions to be performed using the portable electronic device 100.

The data port 114 enables a subscriber to set preferences through an external device or software application and extends the capabilities of the portable electronic device 100 by providing for information or software downloads to the portable electronic device 100 other than through a wireless communication network. The alternate download path may, for example, be used to load an encryption key onto the portable electronic device 100 through a direct and thus reliable and trusted connection to provide secure device communication.

The data port 114 can be any suitable port that enables data communication between the portable electronic device 100 and another computing device. The data port 114 can be a serial or a parallel port. In some instances, the data port 114 can be a USB port that includes data lines for data transfer and a supply line that can provide a charging current to charge the battery 130 of the portable electronic device 100.

The short-range communications subsystem 122 provides for communication between the portable electronic device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 and 802.15 family of standards developed by IEEE.

In use, a received signal such as a text message, an email message, webpage download, or any other information is processed by the communication subsystem 104 and input to the main processor 102 where the received signal is processed for output to the display 110 or alternatively to the auxiliary I/O subsystem 112. A subscriber may also compose data items, such as email messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the portable electronic device 100 is substantially similar, except that the received signals are output to the speaker 118, and signals for transmission are generated by the microphone 120. Alternative voice or audio I/O subsystems, such as a voice message recording subsystem, can also be implemented on the portable electronic device 100. Although voice or audio signal output is accomplished primarily through the speaker 118, the display 110 can also be used to provide additional information such as the identity of a calling party, duration of a voice call, or other voice call related information.

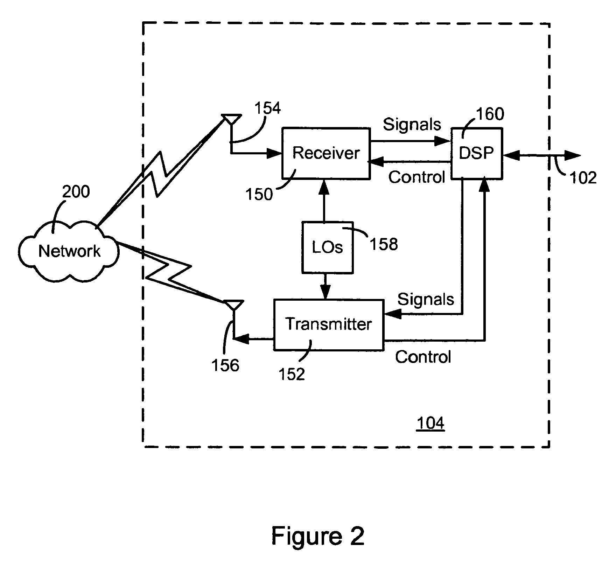

Referring now to Figure 2, an example of a block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the portable electronic device 100 is intended to operate. Thus, it should be understood that the design illustrated in Figure 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the portable electronic device 100 and the wireless network 200 can contain one or more different channels, typically different RF channels, and associated protocols used between the portable electronic device 100 and the wireless network 200. An RF channel is a limited resource that should be conserved, typically due to limits in overall bandwidth and limited battery power of the portable electronic device 100.

When the portable electronic device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to Figure 3, a block diagram of an example of an implementation of a node 202 of the wireless network 200 is shown. In practice, the wireless network 200 comprises one or more nodes 202. In conjunction with the connect module 144, the portable electronic device 100 can communicate with the node 202 within the wireless network 200. In the example of an implementation of Figure 3, the node 202 is configured in accordance with General Packet Radio Service (GPRS) and Global Systems for Mobile (GSM) technologies. The node 202 includes a base station controller (BSC) 204 with an associated tower station or base station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable portable electronic devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the portable electronic device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from portable electronic devices within its cell via the station 206. The fixed transceiver equipment normally performs such functions as modulation and possibly encoding and/or encryption of signals to be transmitted to the portable electronic device 100 in accordance with particular, usually predetermined, communication protocols and parameters, under control of its controller. The fixed transceiver equipment similarly demodulates and possibly decodes and decrypts, if necessary, any communication signals received from the portable electronic device 100 within its cell. Communication protocols and parameters may vary between different nodes. For example, one node may employ a different modulation scheme and operate at different frequencies than other nodes.

For all portable electronic devices 100 registered with a specific network, permanent configuration data such as a user profile is stored in the HLR 212. The HLR 212 also contains location information for each registered portable electronic device and can be queried to determine the current location of a portable electronic device. The MSC 210 is responsible for a group of location areas and stores the data of the portable electronic devices currently in its area of responsibility in the VLR 214. Further, the VLR 214 also contains information on portable electronic devices that are visiting other networks. The information in the VLR 214 includes part of the permanent portable electronic device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each portable electronic device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given portable electronic device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a portable electronic device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each portable electronic device 100 must be assigned to one or more APNs and portable electronic devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a portable electronic device 100 is not using its PDP Context, the PDP Context can be de-allocated and the IP address returned to the IP address pool managed by the DHCP server 220.

Referring now to Figure 4, shown therein is a block diagram illustrating components of an example of a configuration of a host system 250 that the portable electronic device 100 can communicate with in conjunction with the connect module 144. The host system 250 will typically be a corporate enterprise or other local area network (LAN), but may also be a home office computer or some other private system, for example, in variant implementations. In this example shown in Figure 4, the host system 250 is depicted as a LAN of an organization to which a user of the portable electronic device 100 belongs. Typically, a plurality of portable electronic devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's portable electronic device 100 is situated on a LAN connection. The cradle 264 for the portable electronic device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the portable electronic device 100, and may be particularly useful for bulk information updates often performed in initializing the portable electronic device 100 for use. The information downloaded to the portable electronic device 100 may include certificates used in the exchange of messages.

The user computers 262a-262n may typically also be connected to other peripheral devices, such as printers, etc. which are not explicitly shown in Figure 4. Furthermore, only a subset of network components of the host system 250 are shown in Figure 4 for ease of exposition and the host system 250 may comprise additional components that are not explicitly shown in the Figure. More generally, the host system 250 may represent a smaller part of a larger network (not shown) of the organization, and may comprise different components and/or be arranged in different topologies than that shown in the example of an embodiment of Figure 4.

To facilitate the operation of the portable electronic device 100 and the wireless communication of messages and message-related data between the portable electronic device 100 and components of the host system 250, a number of wireless communication support components 270 can be provided. In some implementations, the wireless communication support components 270 can include a management server 272, a mobile data server (MDS) 274, a web server, such as Hypertext Transfer Protocol (HTTP) server 275, a contact server 276, and a device manager module 278. HTTP servers can also be located outside the enterprise system, as indicated by the HTTP server 275 attached to the network 224. The device manager module 278 includes an IT Policy editor 280 and an IT user property editor 282, as well as other software components for allowing an IT administrator to configure the portable electronic devices 100. In an alternative example embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the portable electronic devices 100. The memory unit 292 can store functions used in implementing the IT policy as well as related data. Other components may also be included. Further, in some implementations, the data store 284 can be part of any one of the servers.

In this example of an embodiment, the portable electronic device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the portable electronic device 100. The wireless VPN router allows a VPN connection to be established directly through a specific wireless network to the portable electronic device 100. The wireless VPN router can be used with the Internet Protocol (IP) Version 6 (IPV6) and IP-based wireless networks. This protocol can provide enough IP addresses so that each portable electronic device has a dedicated IP address, making it possible to push information to a portable electronic device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the portable electronic device 100 in this alternative implementation.

Messages intended for a user of the portable electronic device 100 are initially received by a message server 268 of the host system 250. Such messages may originate from any number of sources. For instance, a message may have been sent by a sender from the computer 262b within the host system 250, from a different portable electronic device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly email messages, within the organization and over the shared network infrastructure 224. Each user in the organization that has been set up to send and receive messages is typically associated with a user account managed by the message server 268. Some implementations of the message server 268 include a Microsoft Exchange™ server, a Lotus Domino™ server, a Novell Groupwise™ server, or another suitable mail server installed in a corporate environment. In some implementations, the host system 250 may comprise multiple message servers 268. The message server provides additional functions including PIM functions such as calendaring, contacts and tasks and supports data storage.

When messages are received by the message server 268, they are typically stored in a data store associated with the message server 268. In at least some example embodiments, the data store may be a separate hardware unit, such as data store 284, that the message server 268 communicates with. Messages can be subsequently retrieved and delivered to users by accessing the message server 268. For instance, an email client application operating on a user's computer 262a may request the email messages associated with that user's account stored on the data store associated with the message server 268. These messages are then retrieved from the data store and stored locally on the computer 262a. The data store associated with the message server 268 can store copies of each message that is locally stored on the portable electronic device 100. Alternatively, the data store associated with the message server 268 can store all of the messages for the user of the portable electronic device 100 and only a smaller number of messages can be stored on the portable electronic device 100 to conserve memory. For instance, the most recent messages (i.e. those received in the past two to three months for example) can be stored on the portable electronic device 100.

When operating the portable electronic device 100, the user may wish to have email messages retrieved for delivery to the portable electronic device 100. The message application 138 operating on the portable electronic device 100 may also request messages associated with the user's account from the message server 268. The message application 138 may be configured (either by the user or by an administrator, possibly in accordance with an organization's IT policy) to make this request at the direction of the user, at some pre-defined time interval, or upon the occurrence of some pre-defined event. In some implementations, the portable electronic device 100 is assigned its own email address, and messages addressed specifically to the portable electronic device 100 are automatically redirected to the portable electronic device 100 as they are received by the message server 268.

The management server 272 can be used to specifically provide support for the management of, for example, messages, such as email messages, that are to be handled by portable electronic devices. Generally, while messages are still stored on the message server 268, the management server 272 can be used to control when, if, and how messages are sent to the portable electronic device 100. The management server 272 also facilitates the handling of messages composed on the portable electronic device 100, which are sent to the message server 268 for subsequent delivery.

For example, the management server 272 may monitor the user's "mailbox" (e.g. the message store associated with the user's account on the message server 268) for new email messages, and apply user-definable filters to new messages to determine if and how the messages are relayed to the user's portable electronic device 100. The management server 272 may also, through an encoder 273, compress messages, using any suitable compression technology (e.g. YK compression, and other known techniques) and encrypt messages (e.g. using an encryption technique such as Data Encryption Standard (DES), Triple DES, or Advanced Encryption Standard (AES)), and push them to the portable electronic device 100 via the shared network infrastructure 224 and the wireless network 200. The management server 272 may also receive messages composed on the portable electronic device 100 (e.g. encrypted using Triple DES), decrypt and decompress the composed messages, re-format the composed messages if desired so that they will appear to have originated from the user's computer 262a, and re-route the composed messages to the message server 268 for delivery.

As indicated above, the portable electronic device 100 includes the Personal Information Manager (PIM) 142 that includes functionality for organizing and managing data records of interest to the user, such as, but not limited to, email, contact data records, calendar events, voice mails, appointments, and task items. The data records are typically associated with contacts of the user of the portable electronic device. PIM applications include, for example, calendar, address book, tasks and memo applications. Additionally, the portable electronic device 100 includes functionality and is operable to send and receive PIN (Personal Identification Number) messages. PIN messages are messages that are relayed from the portable electronic device 100 for wireless delivery to a similarly enabled device identified by a unique number associated with the device. PIN messages may also be relayed from a similarly enabled device to the portable electronic device 100 identified by unique number. Thus, PIN messages are not transmitted to or through the host system 250.

Certain properties or restrictions associated with messages that are to be sent from and/or received by the portable electronic device 100 can be defined (e.g. by an administrator in accordance with IT policy) and enforced by the management server 272. These may include whether the portable electronic device 100 may receive encrypted and/or signed messages, minimum encryption key sizes, whether outgoing messages must be encrypted and/or signed, and whether copies of all secure messages sent from the portable electronic device 100 are to be sent to a pre-defined copy address, for example.

The management server 272 may also be adapted to provide other control functions, such as only pushing certain message information or pre-defined portions (e.g. "blocks") of a message stored on the message server 268 to the portable electronic device 100. For example, in some cases, when a message is initially retrieved by the portable electronic device 100 from the message server 268, the management server 272 may push only the first part of a message to the portable electronic device 100, with the part being of a pre-defined size (e.g. 2 KB). The user can then request that more of the message be delivered in similar-sized blocks by the management server 272 to the portable electronic device 100, possibly up to a maximum pre-defined message size. Accordingly, the management server 272 facilitates better control over the type of data and the amount of data that is communicated to the portable electronic device 100, and can help to minimize potential waste of bandwidth or other resources.

The MDS 274 encompasses any other server that stores information that is relevant to the corporation. The mobile data server 274 may include, but is not limited to, databases, online data document repositories, customer relationship management (CRM) systems, or enterprise resource planning (ERP) applications. The MDS 274 can also connect to the Internet or other public network, through HTTP server 275 or other suitable web server such as a File Transfer Protocol (FTP) server, to retrieve HTTP webpages and other data. Requests for webpages from the portable electronic device 100 are typically routed through MDS 274 and then to HTTP server 275, through suitable firewalls and other protective mechanisms. The web server then retrieves the webpage over the Internet, and returns it to MDS 274. As described above in relation to management server 272, MDS 274 is typically provided, or associated, with an encoder 277 that permits retrieved data, such as retrieved webpages, to be compressed, using any suitable compression technology (e.g. YK compression, and other known techniques), and encrypted (e.g. using an encryption technique such as DES, Triple DES, or AES), and then pushed to the portable electronic device 100 via the shared network infrastructure 224 and the wireless network 200.

The contact server 276 can provide information for a list of contact data records for the user in a similar fashion as the address book on the portable electronic device 100. Accordingly, for a given contact, the contact server 276 can include the name, phone number, work address and email address of the contact, among other information. The contact server 276 can also provide a global address list that contains the contact information for all of the contact data records associated with the host system 250.

The management server 272, the MDS 274, the HTTP server 275, the contact server 276, the device manager module 278, the data store 284 and the IT policy server 286 do not need to be implemented on separate physical servers within the host system 250. For example, some or all of the functions associated with the management server 272 may be integrated with the message server 268, or some other server in the host system 250. Alternatively, the host system 250 may comprise multiple management servers 272, particularly in variant implementations where a large number of portable electronic devices need to be supported.

The device manager module 278 provides an IT administrator with a graphical user interface with which the IT administrator interacts to configure various settings for the portable electronic devices 100. As mentioned, the IT administrator can use IT policy rules to define behaviors of certain applications on the portable electronic device 100 that are permitted such as phone, web browser or Instant Messenger use. The IT policy rules can also be used to set specific values for configuration settings that an organization requires on the portable electronic devices 100 such as auto signature text, WLAN/VoIP/VPN configuration, security requirements (e.g. encryption algorithms, password rules, etc.), specifying themes or applications that are allowed to run on the portable electronic device 100, and the like.

As indicated by the above description, a portable electronic device may include a range of software applications and a range of functionality. Different applications entail different demands for power, and sometimes the demand for power for a single application may vary depending upon one or more factors. For example, an application or applications involved in transmitting a message wirelessly to a base station 206 may demand more power when the portable electronic device is farther from the base station. As was described earlier, the portable electronic device is (for purposes of illustration) a battery-powered device. As such, battery power is finite and efficient use and management of power is desirable both from a use and user experience perspective. Not only do individual applications have different power requirements, individual users place different levels of importance on these applications, and may have a preference for certain applications over others. For example, the ability to call an emergency number may be universally important, while some users may prefer certain data communication applications, such as Instant Messaging (IM) or Social Networking Service (SNS) service applications, over other communication applications, such as voice or email communication applications. Therefore, improved power management techniques can keep these applications available when power resources are running low or depleted and also enhance user experience by extending the availability of emergency or preferred applications over other applications.

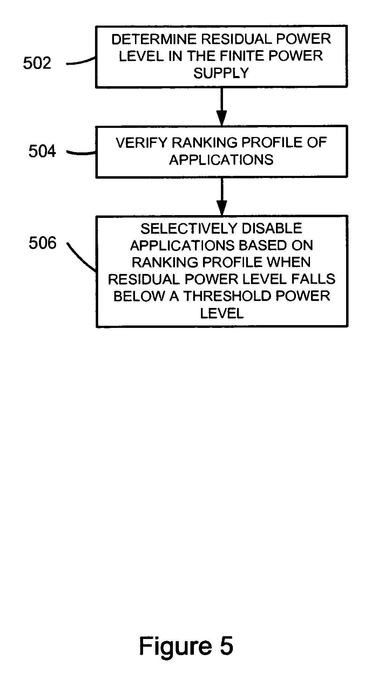

According to an aspect, a method of power management in a portable electronic device powered by a finite power supply is provided as illustrated in Figure 5. The method comprises determining a residual power level in the finite power supply and selectively disabling one or more applications installed on the portable electronic device based on an application ranking profile of each of the one or more applications when the residual power level falls below a threshold power level.

As shown in Figure 5, in the method of power management in a portable electronic device 100 powered by a battery 132, the residual battery power is determined at step 502. There are many techniques for assessing or estimating residual battery power, such as by monitoring changes in output voltage or current or other factors (such as temperature), or any combination thereof. The determination in step 502 may use any such technique or any combination of techniques. The determination may be carried out by, or under, the regulation of the processor 102. Step 502 may be repeated, that is, the processor 102 may periodically or continually monitor the power available from the portable electronic device's finite power supply.

In some implementations, a residual power level falling below a threshold power level may trigger verification of an application ranking profile of various applications executable on the portable electronic device 100 (step 504). In an implementation, an application ranking profile includes a list of applications installed on the portable electronic device and the relative ranking (or relative importance indicator) of each application. The application ranking profile may set the relative importance or priority of an application as a function of user preferences, application developer preference, or the device manufacturer preference, or any combination thereof. In some implementations, for example, the manufacturer may set a default application ranking profile, which the user may alter. In other implementations, a default application ranking profile may be altered by a user in part, with some relative importance indicators being modifiable under specific conditions or not user-modifiable at all. The application ranking profile need not be in any particular format, and need not be limited only to applications and rankings.

In general, verification may entail the processor 102 determining which applications are present on the portable electronic device 100, which applications may be consuming power, and what degree of importance or value has been assigned to a particular application. Verification may also include retrieving information about the importance or value from memory. One or more such applications can then be selectively disabled at step 506 based on the application ranking profile. In general, the processor 102 may disable an application by shutting down a launched (executing) application, by placing a launched application into a low-power mode in which the application consumes less power, or by preventing the application from launching, for example. The general effect of disabling applications is that residual power is managed and conserved. Optionally, the processor 102 may generate a notification (such as an audible, visual, vibratory or other notification) that may inform the user about the applications being disabled.

In an example embodiment, an Application Programming Interface (API) is provided that allows the relative importance of the applications executable on the portable electronic device 100 to be specified or identified by ranking the applications in an application ranking profile according to their relative importance. For example, a user may use the API to specify the relative value of applications, the value being determined by the user. Those applications that the user deems more valuable may thereby be given higher rankings, and those applications that the user deems less valuable may thereby be given lower rankings. The operating system 134 on the processor 102 can then allocate power to various applications by taking into account the application ranking profile while selectively disabling some of the applications. The operating system typically has the capability to control some or all operations of the various applications. In general, lower-ranked applications are disabled first. The processor 102 may disable an application by shutting down a launched application, by placing a launched application into a low-power mode in which the application consumes less power (for example, by limiting the functionality of the application such as disabling network features, minimizing graphic resolution, etc.), or by preventing the application from launching, for example. The general effect is that applications having a higher precedence, significance, or ranking can continue to be used even as the power resources are depleted. As will be described below, the process shown in Figure 5 may be repeated. For example, as the power level drops below further threshold levels (e.g., below a second threshold or a third threshold), additional applications may be disabled.

In addition, the processor 102 may automatically reactivate the selectively disabled applications as the power supply of the portable electronic device is (partially or fully) recharged, or when the portable electronic device is receiving power from another power supply (such as a wall outlet). Reactivating a disabled application may include placing a launched application in full-power mode, restoring the ability to launch the previously disabled application, etc.

As discussed earlier, the application ranking profile API can set the relative importance or priority of an application as a function of user preferences, application developer preference, or the device manufacturer preference, or any combination thereof. The application ranking profile API and the operating system of the portable electronic device cooperate to efficiently manage or govern the reserve or residual power for applications that are either universally important or relatively important to the user.

For system integrity and security purposes (or for other reasons), device manufactures may retain control over all aspects of the application ranking profile API. In some example embodiments, trusted third-party application developers may be provided access to the application ranking profile API to set the precedence or significance of their applications. For example, application developers for emergency alert management applications may be provided access to the application ranking profile API to set their applications relative precedence of the emergency applications, either with respect to other emergency applications (i.e., within a class of applications) or with respect to all other applications installed on the portable electronic device. As used herein, a "class of application" refers to a category of the application, such as emergency application class, gaming application class, etc. In addition, restrictions may be placed on modifications to the application ranking profile by policing the class of application. For example, modifications to the ranking of emergency and other key communication applications may be restricted to device manufacturers and OS developers. Users or application developers, such as gaming developers, would be allowed to modify the precedence or significance of only a subset of applications.

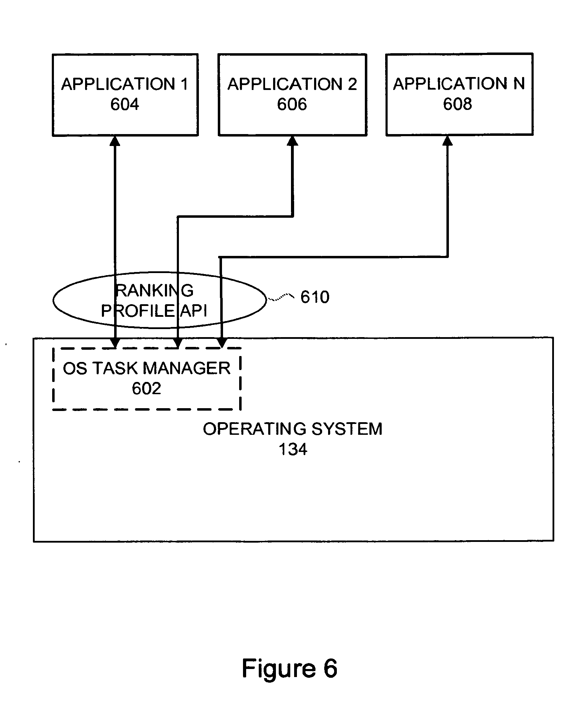

Figure 6 is a schematic representation of an application ranking profile API for power management in a portable electronic device according to an example embodiment. The operating system 134 of the portable electronic device 100 controls several applications, for example, Application 1 604, Application 2 606 and Application N 608 that are executed or installed on the portable electronic device 100. The operating system 134 typically includes an OS task manager 602 that manages the execution of the Applications 1 through N. It is noted that not all applications have to be concurrently running on the portable electronic device at any given time.

In an example embodiment, the OS task manager 602 communicates with the various applications through an application ranking profile API 610 to determine the relative significance of each of the applications. The operating system 134 implements a power management scheme to efficiently manage the residual power by selectively disabling one or more applications based on the application ranking profile API 610. In the example embodiment shown in Figure 6, the application ranking profile API 610 resides outside the operating system 134 and is implemented as a stand-alone API in a power management layer external to the operating system 134. However, the application ranking profile API can be implemented in various other embodiments.

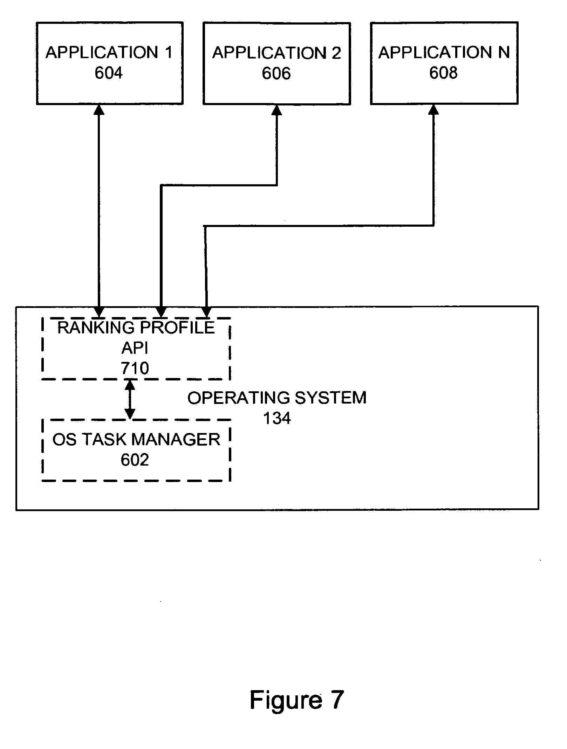

For instance, in an example embodiment shown in Figure 7, the application ranking profile API 710 is an operating system level (OS-level) application ranking profile API for power management in the portable electronic device 100. In this example, the operating system 134 retains control over the OS-level application ranking profile API 710 to determine the relative significance or importance of applications 604, 606, and 608 and efficiently governs the reserve or residual power by selectively disabling one or more applications as the power is depleted.

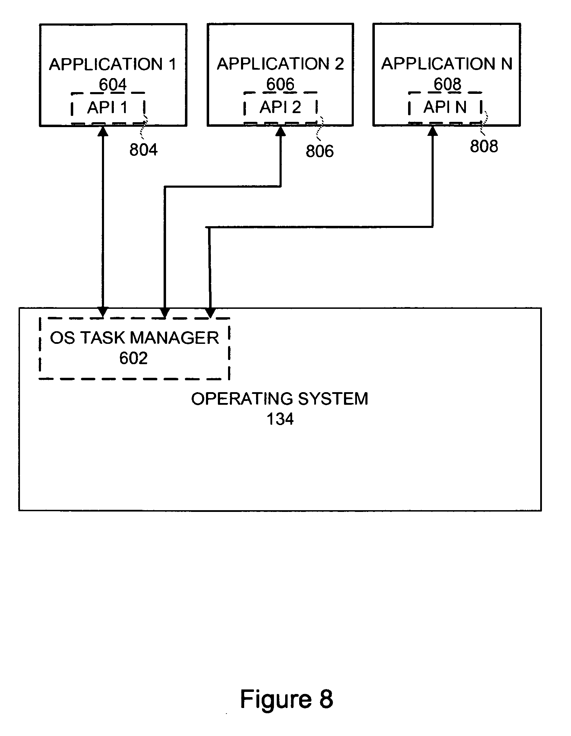

In some situations, it may be desirable to provide an application level application ranking profile API. This is illustrated in Figure 8, where application level application ranking profile APIs 804, 806 and 808 are associated with applications 604, 606 and 608, respectively. As described earlier, it may be useful to provide certain trusted third-party application developers to specify the relative importance of their applications for effective power management in the portable electronic device 100. In such instances, any conflict in determining precedence of one application over another may be resolved by the operating system 134 via the OS task manager 602.

Table 1 provides an illustrative example of relative importance of various applications installed on a portable electronic device 100 specified in the application ranking profile API. These data are based upon research made with a battery-powered portable electronic device. In the example shown in Table 1, when the residual battery power level is at 25% (i.e., 25% of total battery power, one example of a threshold level) all applications except those having a priority of 1-5 are made unavailable for use. As the residual battery power level drops to 20%, the personal e-mail application (priority 5) is selectively disabled, along with those applications having a lower priority, by the operating system 134. Similarly, as the residual battery power level drops to 15%, corporate e-mail functionality is additionally be disabled and so on. When the residual battery power level drops level to 5%, all applications, except emergency phone access (priority 1 - highest priority), are disabled by the operating system 134, thereby retaining the functionality of the portable electronic device to provide emergency phone access for the maximum duration of battery life.

**Table 1**

| Priority-Application | Application Reserve Power | Relative Importance/Significance | Modifiable by Application? |
|---|---|---|---|
| 1 Emergency Phone Access | 5% | 1 | No |
| 2 - Regular Voice | 5% | 2 | Yes |
| 3-SMS | 5% | 3 | Yes |
| 4 - Corporate E-Mail | 5% | 4 | Yes |
| 5- Personal E-Mail | 5% | 5 | Yes |
| 6 -All other applications | X% | Y | Yes |

While the above described application ranking profile API is based on individual applications, that is, setting an application ranking profile for each application individually, the application ranking profile API may be based on a class or group of applications. Applications may be grouped in any manner or according to any criteria. Each group may be assigned an associated group application ranking profile. The groups may be selectively disabled based on the group application ranking profile as the residual power in the power supply falls below a threshold power level. An example of an application ranking profile based on groups of applications is shown in Table 2.

**Table 2**

| Priority - Group | Application Reserve Power | Relative Importance/Significance | Modifiable by Application? |
|---|---|---|---|
| 1 - General Emergency Phone Access | 5% | 1 | No |
| 2 - User Specified Emergency Phone Number | 5% | 2 | Yes |
| 3 - User Specified Emergency Contact (SMS, PIN, IM etc) | 5% | 3 | Yes |
| 4 -All other groups | N/A | N/A | Yes |

As shown above, in the group-based application ranking profile API, general emergency phone access to locally mandated emergency services is accorded the highest priority and will be functional even when the residual battery power level is at 5%. The user may specify an emergency phone number, which is allotted a priority of 2 and is functional at all time when the residual battery power level is higher than 10%. The user may also specify an emergency contact and also specify different applications by which to reach this emergency contact, for example, by SMS, IM, or PIN messaging etc., apart from email and phone access. Therefore, in the above example, when the residual battery power level is at 15%, all modes or applications of accessing or contacting the user-specified emergency contact are made available on the portable electronic device, while all other application profiles are disabled by the operating system to efficiently manage the residual battery power.

Table 3 is another example of a group-based application ranking profile API.

**Table 3**

| Priority - Group | Application Reserve Power | Relative Importance/Significance | Modifiable by Application? |
|---|---|---|---|
| 1 - User Specified Emergency Contact via any messaging application | 5% | 1 | No |
| 2 - PIN messaging and E-mail applications | 5% | 2 | Yes |
| 3 - All IM applications | 5% | 3 | Yes |
| 4 - Browser and third-party applications | N/A | N/A | Yes |

In the above example, the applications are grouped together based on grouping criteria, which can be user-specified or set by the device manufacturer in the OS-level application ranking profile API to govern the residual battery power.

The application ranking profile API allows the operating system 134 of the portable electronic device to selectively disable applications based on the residual power. In certain cases, the network connectivity of the portable electronic device can generally be maintained and the applications may be selectively disabled by the operating system independent of the network connectivity. For example, network connectivity may be maintained to allow PIN and email functionality while third-party IM applications may be disabled. Network connectivity may be maintained by keeping enabled (i.e., not disabling) the applications that support communication with a network, such as any of the networks mentioned previously. Maintaining network connectivity may entail having receiving functionality enabled and transmitting functionality enabled. In other instances, maintaining network connectivity may involve having the transmitting functionality of an application enabled, while its receiving functionality may be selectively disabled (or vice versa). This may, for example, allow the user to transmit emergency messages or make emergency phone calls while the user may not be able to receive any messages or phone calls from others.

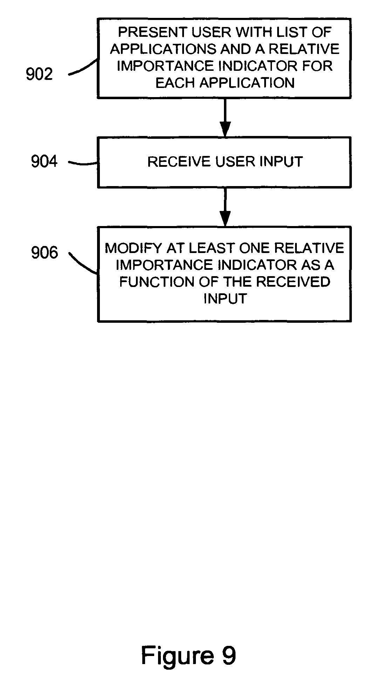

According to an aspect, a user interface method is provided. The user interface method comprises presenting a user with a list of applications installed on a portable electronic device along with a relative importance indicator for each application, as shown at step 902 in Figure 9. User input is received at step 904 and at least one relative importance indicator is modified as a function of the received input at step 906. In this way, the user may be able to express one or more user preferences, i.e., exercise some control over the relative importance of the applications. One or more applications may be selectively disabled based on the modified relative importance indicator as a residual power in a finite power supply of the portable electronic device falls below a threshold power level. Optionally, the processor of the portable electronic device may present the user with a notification of the selectively disabled applications as discussed below.

In example embodiments, the applications which have been disabled by the operating system in order to manage the residual power may be indicated as "unavailable" or "temporarily disabled" on the portable electronic device, for example, on a display of the portable electronic device. The icons associated with applications (which may appear on the display 110), may be "grayed-out" or may be made "non-selectable" as and when they are disabled, for example. In other instances, no action may be taken upon receiving input to execute or launch disabled applications.

It is noted that the application ranking profile API 610 and 710 may allow the operating system to selectively disable certain applications based on the residual battery power as a percentage of the total "visible" battery power (that is, the residual battery power shown on the display of the portable electronic device) or as a percentage of total battery power that includes a "hidden" component that can be tapped when the "visible" battery power reaches 0%.

Furthermore, as described above, the priority of applications indicating their relative importance within the application ranking profile API may be determined or set based on user preferences, application developer preference, or the device manufacturer preference, or any combination thereof. In addition, the determination of the relative significance or importance of the applications may be dynamically determined and adjusted based on heuristics. For example, the operating system may keep track of usage of various application, user demographics and power supply information and determine which applications get relative priority, as a function of those factors. In an example scenario, say the user is 22 years of age, and uses social networking and instant messaging applications more often than phone or email applications, the system can automatically prioritize or rank social networking and instant messaging applications higher than other communication applications.

According to another aspect, a portable electronic device is provided. The portable electronic device is powered by a finite power supply, such as a battery, and includes a memory unit and a processor operably connected to the memory unit to execute a program stored in the memory unit to cause the portable electronic device to determine a residual battery power in the battery; and, selectively disable one or more applications installed on the portable electronic device based on an application ranking profile of the one or more applications to manage the residual power in the portable electronic device. Components are deemed operably connected when the operation of one can affect the operation of the other. Operably connected components may be, but need not be, proximate to one another or physically connected to one another.

According to another aspect, a computer program product is provided. The computer program product includes a tangible computer-readable medium having computer-readable code embodied therein. The computer-readable code is executable by a processor of a portable electronic device powered by a finite power supply to cause the portable electronic device to determine a residual power in the power supply; and selectively disable one or more applications installed on the portable electronic device based on an application ranking profile of the one or more applications.

Implementation of one or more embodiments may realize one or more benefits. Improved power management techniques using an application ranking profile API can make the one or more applications available when power resources are running low or depleted and also enhance user experience by extending the life of emergency or preferred applications over other applications. The power management method described herein may also enhance the safety aspects of the portable electronic device by ensuring that emergency phone access functionality is retained for the longest period of battery life. In addition, many of the embodiments described herein support flexible modification of the application ranking profiles to suit users' individual needs or tastes. Further flexibility may be realized in that the concepts may be adapted to a variety of electronic devices having a variety of applications and a variety of functionalities.

In the foregoing description, for purposes of explanation, numerous details are set forth in order to provide a thorough understanding of the present invention. However, these specific details are not required in order to practice the present invention. In other instances, well-known electrical structures and circuits are shown in block diagram form in order not to obscure the present invention. For example, specific details are not provided as to whether the example embodiments of the invention described herein are implemented as a software routine, hardware circuit, firmware, or a combination thereof.

Embodiments described herein may be represented as a software product stored in a machine-readable medium (also referred to as a computer-readable medium, a processor-readable medium, or a computer usable medium having a computer readable program code embodied therein). The machine-readable medium may be any suitable tangible medium, including magnetic, optical, or electrical storage medium including a diskette, compact disk read only memory (CD-ROM), memory device (volatile or non-volatile), or similar storage mechanism. The machine-readable medium may contain various sets of instructions, code sequences, configuration information, or other data, which, when executed, cause a processor to perform steps in a method according to an example embodiment. Other instructions and operations necessary to implement the described example embodiments may also be stored on the machine-readable medium. Software running from the machine readable medium may interface with circuitry to perform the described tasks.

While the example embodiments described herein are directed to particular implementations of the electronic device and method of controlling the electronic device, the above-described embodiments are intended to be examples. Alterations, modifications and variations may be effected to the particular example embodiments by those of skill in the art without departing from the scope of the present disclosure.

## Claims

1. A method of power management in a portable electronic device (100) powered by a finite power supply (130), the method comprising:
determining (502) a residual power level in the finite power supply; and,
selectively (506) disabling one or more applications installed on the portable electronic device based on an application ranking profile (504) when the residual power level falls below a threshold power level,
wherein the application ranking profile includes a list of applications installed on the portable electronic device and a relative importance indicator of each application, the relative importance indicator automatically determined based on a frequency of use of each of the one or more applications.

2. The method according to claim 1, wherein selectively disabling one or more applications installed on the portable electronic device includes preventing launching of an application.

3. The method according to claim 1, wherein the relative importance indicator is further determined as a function of at least one of user preference, application developer preference, and device manufacturer preference.

4. The method according to any preceding claim, further comprising:
generating a notification of the selectively disabled applications.

5. The method according to any preceding claim, wherein the threshold power level is a first threshold power level, the method further comprising repeating the selective disabling of the one or more applications when the residual power level in the power supply falls below a second threshold power level.

6. The method according to any preceding claim, further comprising automatically reactivating the selectively disabled applications based on the application ranking profile of the one or more applications as the power supply is recharged.

7. The method according to any preceding claim, wherein the one or more applications are grouped into a plurality of groups based on a grouping criteria, each group having an associated group application ranking profile, and
the plurality of groups are selectively disabled based on the group application ranking profile as the residual power in the power supply falls below the threshold power level.

8. The method according to any preceding claim, further comprising maintaining network connectivity of the portable electronic device while selectively disabling one or more applications.

9. A portable electronic device (100) powered by a finite power supply (130), the electronic device comprising:
a memory unit (108); and
a processor (102) operably connected to the memory unit (108) to execute a program stored in the memory unit (108) to cause the portable electronic device (100) to execute the method of any one of claims 1 to 8.

10. A computer program product comprising a computer-readable medium having computer-readable code embodied therein executable by a processor (102) of a portable electronic device (100) powered by a finite power supply (130) to carry out the method of any one of claims 1 to 8.

## Patentansprüche

1. Ein Verfahren zur Energieverwaltung in einer tragbaren elektronischen Vorrichtung (100), die von einer endlichen Energieversorgung (130) mit Energie versorgt wird, wobei das Verfahren aufweist:
Bestimmen (502) eines Restenergiepegels in der endlichen Energieversorgung; und
selektives Deaktivieren (506) einer oder mehrerer Anwendung(en), die auf der tragbaren elektronischen Vorrichtung installiert ist/sind, basierend auf einem Anwendungsrangfolgeprofil (504), wenn der Restenergiepegel unter einen Schwellenenergiepegel fällt,
wobei das Anwendungsrangfolgeprofil eine Liste von Anwendungen, die auf der tragbaren elektronischen Vorrichtung installiert sind, und einen Indikator einer relativen Wichtigkeit jeder Anwendung umfasst, wobei der Indikator einer relativen Wichtigkeit automatisch basierend auf einer Häufigkeit einer Verwendung von jeder der einen oder mehreren Anwendung(en) bestimmt wird.

2. Das Verfahren gemäß Anspruch 1, wobei das selektive Deaktivieren einer oder mehrerer Anwendung(en), die auf der tragbaren elektronischen Vorrichtung installiert ist/sind, ein Verhindern eines Startens einer Anwendung umfasst.

3. Das Verfahren gemäß Anspruch 1, wobei der Indikator einer relativen Wichtigkeit weiter als eine Funktion zumindest eines aus einer Benutzerpräferenz, Anwendungsentwicklerpräferenz und Vorrichtungsherstellerpräferenz bestimmt wird.

4. Das Verfahren gemäß einem vorhergehenden Anspruch, das weiter aufweist:
Erzeugen einer Benachrichtigung hinsichtlich der selektiv deaktivierten Anwendungen.

5. Das Verfahren gemäß einem vorhergehenden Anspruch, wobei der Schwellenenergiepegel ein erster Schwellenenergiepegel ist, wobei das Verfahren weiter ein Wiederholen des selektiven Deaktivierens der einen oder mehreren Anwendung(en) aufweist, wenn der Restenergiepegel der Energieversorgung unter einen zweiten Schwellenenergiepegel fällt.

6. Das Verfahren gemäß einem vorhergehenden Anspruch, das weiter aufweist ein automatisches Reaktivieren der selektiv deaktivierten Anwendungen basierend auf dem Anwendungsrangfolgeprofil der einen oder mehreren Anwendung(en), wenn die Energieversorgung wiederaufgeladen wird.

7. Das Verfahren gemäß einem vorhergehenden Anspruch, wobei die eine oder mehrere Anwendung(en) in eine Vielzahl von Gruppen basierend auf einem Gruppierungskriterium gruppiert ist/sind, wobei jede Gruppe ein assoziiertes Gruppe-Anwendungsrangfolgeprofil hat, und
die Vielzahl von Gruppen selektiv deaktiviert wird basierend auf dem Gruppe-Anwendungsrangfolgeprofil, wenn die Restenergie der Energieversorgung unter den Schwellenenergiepegel fällt.

8. Das Verfahren gemäß einem vorhergehenden Anspruch, das weiter ein Aufrechterhalten einer Netzwerkkonnektivität der tragbaren elektronischen Vorrichtung während eines selektiven Deaktivierens einer oder mehrerer Anwendung(en) aufweist.

9. Eine tragbare elektronische Vorrichtung (100), die von einer endlichen Energieversorgung (130) mit Energie versorgt wird, wobei die elektronische Vorrichtung aufweist:
eine Speichereinheit (108); und
einen Prozessor (102), der betriebsfähig mit der Speichereinheit (108) verbunden ist, um ein in der Speichereinheit (108) gespeichertes Programm auszuführen, um die tragbare elektronische Vorrichtung (100) zu veranlassen, das Verfahren gemäß einem der Ansprüche 1 bis 8 auszuführen.

10. Ein Computerprogrammprodukt, das ein computerlesbares Medium aufweist mit darin enthaltenem computerlesbaren Code, der durch einen Prozessor (102) einer tragbaren elektronischen Vorrichtung (100) ausführbar ist, die von einer endlichen Energieversorgung (130) mit Energie versorgt wird, um das Verfahren gemäß einem der Ansprüche 1 bis 8 auszuführen.

## Revendications

1. Procédé de gestion de puissance dans un dispositif électronique portable (100) alimenté par une source d'alimentation finie (130), le procédé comprenant :
la détermination (502) d'un niveau de puissance résiduelle dans la source d'alimentation finie ; et,
la désactivation sélective (506) d'une ou plusieurs applications installées sur le dispositif électronique portable sur la base d'un profil de classement d'application (504) lorsque le niveau de puissance résiduelle tombe au-dessous d'un niveau de puissance de seuil,
dans lequel le profil de classement d'application inclut une liste d'applications installées sur le dispositif électronique portable et un indicateur d'importance relative de chaque application, l'indicateur d'importance relative déterminé automatiquement sur la base d'une fréquence d'utilisation de chacune des une ou plusieurs applications.

2. Procédé selon la revendication 1, dans lequel la désactivation sélective d'une ou plusieurs applications installées sur le dispositif électronique portable inclut le fait d'empêcher le lancement d'une application.

3. Procédé selon la revendication 1, dans lequel l'indicateur d'importance relative est en outre déterminé en fonction d'au moins une d'une préférence d'utilisateur, d'une préférence de développeur d'application, et d'une préférence de fabricant de dispositif.

4. Procédé selon l'une quelconque des revendications précédentes, comprenant en outre :
la génération d'une notification des applications désactivées sélectivement.

5. Procédé selon l'une quelconque des revendications précédentes, dans lequel le niveau de puissance de seuil est un premier niveau de puissance de seuil, le procédé comprenant en outre la répétition de la désactivation sélective des une ou plusieurs applications lorsque le niveau de puissance résiduelle dans la source d'alimentation tombe au-dessous d'un second niveau de puissance de seuil.

6. Procédé selon l'une quelconque des revendications précédentes, comprenant en outre la réactivation automatique des applications désactivées sélectivement sur la base du profil de classement d'application des une ou plusieurs applications au moment où la source d'alimentation est rechargée.

7. Procédé selon l'une quelconque des revendications précédentes, dans lequel les une ou plusieurs applications sont regroupées en une pluralité de groupes sur la base d'un critère de regroupement, chaque groupe ayant un profil de classement d'application de groupe associé, et
la pluralité de groupes sont désactivés sélectivement sur la base du profil de classement d'application de groupe au moment où la puissance résiduelle dans la source d'alimentation tombe au-dessous du niveau de puissance de seuil.

8. Procédé selon l'une quelconque des revendications précédentes, comprenant en outre le maintien d'une connectivité de réseau du dispositif électronique portable tout en désactivant sélectivement une ou plusieurs applications.

9. Dispositif électronique portable (100) alimenté par une source d'alimentation finie (130), le dispositif électronique comprenant :
une unité de mémoire (108) ; et
un processeur (102) connecté fonctionnellement à l'unité de mémoire (108) pour exécuter un programme stocké dans l'unité de mémoire (108) pour amener le dispositif électronique portable (100) à exécuter le procédé de l'une quelconque des revendications 1 à 8.

10. Produit de programme informatique comprenant un support lisible par ordinateur ayant un code lisible par ordinateur incorporé dans celui-ci exécutable par un processeur (102) d'un dispositif électronique portable (100) alimenté par une source d'alimentation finie (130) pour effectuer le procédé de l'une quelconque des revendications 1 à 8.
